# FASCICULE DE BREVET EUROPEEN

(11) **EP 0 769 631 B1**
(45) Date de publication et mention de la délivrance du brevet: **12.04.2000**
(21) Numéro de dépôt: 96402204.0
(22) Date de dépôt: 16.10.1996
(51) Int. Cl.: F16C 33/66

(54) **Roulement avec drainage dynamique alimenté en lubrifiant**
Wälzlager mit dynamischer, ölversorgter Drainage
Rolling bearing with dynamic, oil-supplied drain

(30) Priorité: 18.10.1995 FR 9512204
(43) Date de publication de la demande: 23.04.1997
(73) Titulaire: SOCIETE NATIONALE D'ETUDE ET DE CONSTRUCTION DE MOTEURS D'AVIATION Snecma, F-75015 Paris (FR)
(72) Inventeur: Dusserre-Telmon, Guy Franck Paul, 77115 Sivry-Courtry (FR); Plona, Daniel Georges, 77870 Vulaines sur Seine (FR); Tourne, Christophe Yvon Gabriel, 91230 Montgeron (FR)

(56) Documents cités:
- EP-A- 0 034 084
- WO-A-94/21932
- US-A- 2 280 659
- US-A- 3 195 965
- US-A- 4 334 720
- US-A- 5 183 342

## Description

L'invention concerne un roulement selon la préambule de la revendication 1, comme connu par exemple par FR-A-8003007.

Les roulements sont couramment utilisés depuis plus d'un siècle dans tous les secteurs de la technique et donnent en général pleine satisfaction, mais ils présentent tout de même des limites qui apparaissent clairement quand des performances élevées sont exigées. C'est ce qui arrive dans l'aéronautique, où on demande à la fois une très longue durée de service, de grandes vitesses de rotation et une faible dissipation de puissance aux roulements de soutien de l'arbre de rotor des turboréacteurs. On utilise normalement des roulements à billes pour tenir aux charges axiales et des roulements à rouleaux pour tenir aux charges radiales. Mais le marché assez peu important de l'aéronautique explique que les fabricants ne se soient pas spécialement préoccupé des problèmes spécifiques à ce secteur. Ils se contentent en général d'utiliser des aciers spéciaux et de proposer des éléments, bagues et billes, usinés avec une meilleure précision que pour les applications ordinaires pour respecter les exigences plus importantes auxquelles il faut satisfaire, ce qui fait que le prix d'un roulement pour l'aéronautique est environ dix fois celui d'un roulement de qualité habituelle.

Un autre problème aigu dans l'aéronautique provient des échauffements, qui sont tels qu'une lubrification ordinaire par injection de graisse à certaines périodes d'entretien ne suffit pas car cette graisse serait vite décomposée. On recourt donc à une lubrification dynamique dans laquelle l'agent de lubrification est de l'huile mise en circulation continue dans une boucle d'alimentation et qui coule entre les bagues avant de ressortir et d'évacuer la chaleur produite par le roulement. On ne doit pourtant pas croire que le lubrifiant soit bénéfique sans contrepartie : entraîné par les billes, il subit une sorte de barattage qui accroît les pertes d'énergie dans la machine, surtout si la vitesse de rotation est élevée. Bien que la perte de rendement soit plutôt faible et qu'elle ne puisse pas être annihilée complètement, les exigences toujours plus grandes justifient qu'on s'intéresse aussi à cet aspect des machines. Une autre conséquence néfaste des systèmes à alimentation permanente est due à la nécessité de construire un circuit de circulation d'huile, comprenant des écopes de récupération, des conduits et une pompe, avec la conséquence que la machine est alourdie et que de l'énergie est encore dissipée.

Un nouveau genre de roulements à billes a donc été conçu pour s'affranchir de ces limitations et de ces inconvénients.

Pour résumer, la caractéristique essentielle de l'invention comme définie dans la deuxième partie de la revendication 1 repose sur l'utilisation de l'énergie dynamique créée par la rotation et cela est obtenu grâce à une forme spéciale de l'une des bagues, qui est désormais percée d'orifices de drainage du lubrifiant.

Pour des roulements à billes, cet effet peut être obtenu avec des bagues à deux points de contact avec les billes. Les roulements à billes ordinaires sont construits avec des bagues à pistes toriques et serrées contre les billes, qui sont ainsi en contact avec les pistes en deux points diamétralement opposés, un au centre de chacune d'elles. En modifiant la forme de ces bagues, plus précisément en les rendant plus étroites par l'élimination de leur partie centrale, la piste prend la forme d'une ogive en coupe diamétrale et les billes sont en contact contre elle par deux points situés sur ses flancs. On dégage alors sur chacune des bagues une aire centrale dans laquelle on peut établir des perçages d'entrée et de sortie d'huile. Comme les perçages ne sont jamais recouverts par les billes qui passent à l'écart de la piste à cet endroit, on ne risque pas d'endommager leur pourtour par les chocs, la pression de Hertz ou la fatigue ni d'interrompre la circulation de l'huile à aucun moment. On a constaté que les caractéristiques de ces roulements étaient bien supérieures grâce à une meilleure circulation d'huile qui était alors établie. C'est pourquoi il est conforme à l'invention d'assurer le drainage de l'huile hors du roulement par des orifices traversant l'une des bagues à sa circonférence centrale. L'entrée de l'huile peut être assurée par des orifices semblables sur l'autre bague ou d'une autre façon. De plus, les orifices de drainage sont inclinés (à partir d'une direction radiale) dans le sens de la rotation du roulement pour favoriser l'écoulement du lubrifiant.

Une autre conséquence bénéfique du perçage des orifices de drainage est que le lubrifiant n'est pas dispersé autour du roulement mais au contraire dirigé sur un trajet bien défini. Il est donc possible de le récupérer sans prévoir une enceinte de lubrifiant compliquée autour du roulement, pourvue de dispositifs de collecte et de dispositif de séparation (appelés déshuileurs) du lubrifiant et des bulles d'air qu'il contient en émulsion à la sortie du roulement.

Il faut ajouter que l'invention est applicable aux roulements à rouleaux, dont une des bagues est alors éventuellement traversée par les orifices de drainage sur deux circonférences annulaires latérales.

L'invention sera mieux comprise à l'aide des figures suivantes, annexées à titre illustratif et non limitatif :
- la figure 1 est une vue générale d'un turboréacteur,
- les figures 2 et 3 représentent plus précisément certains roulements de l'invention,
- la figure 3a représente une modification du roulement de la figure 3, et un système de retour de lubrifiant dans le roulement,
- la figure 3b représente un autre système de retour de lubrifiant dans le roulement,
- les figures 4, 5, 6 et 7 représentent d'autres variantes de réalisation de roulements,
- la figure 6a représente une variante de réalisation de la figure 6,
- les figures 8 et 9 représentent deux réalisations comportant des roulements à rouleaux,
- et les figures 10 et 11 représentent quelques possibilités de recyclage dans l'installation du lubrifiant drainé hors du roulement.

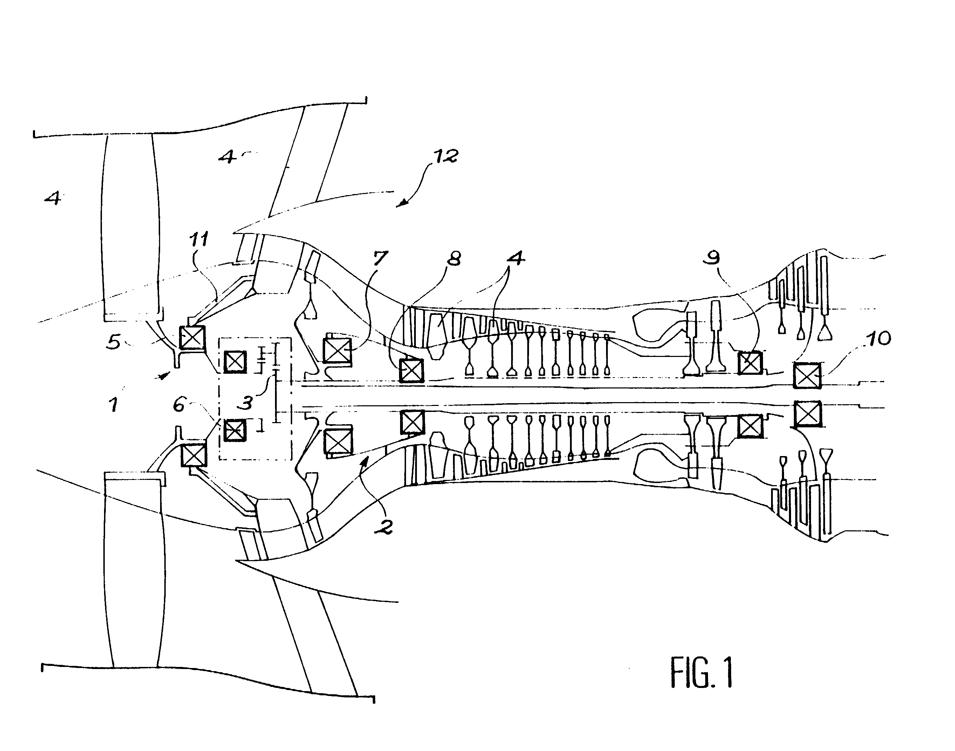

La figure 1 représente un turboréacteur et en particulier son arbre, qui est ici composé d'une partie avant 1 et d'une partie arrière 2 coaxiales et réunies par un réducteur 3 qui n'est qu'ébauché par commodité de représentation. Les parties d'arbre 1 et 2 portent des aubes 4 de compresseurs et de turbines qu'ils font tourner à des vitesses de rotation différentes par l'entremise du réducteur 3. Les performances du moteur sont améliorées au prix d'une dissipation d'énergie dans le réducteur 3, qui impose d'ajouter plusieurs roulements supplémentaires. L'arbre avant 1 est ainsi soutenu par un roulement à billes 5 et par un roulement à rouleaux 6 placé un peu en arrière, dans la zone du réducteur 3 ; la partie arrière 2 de l'arbre, beaucoup plus longue, est soutenue d'avant en arrière d'abord par une paire de roulements à billes 7 et 8 à une extrémité, puis par une paire de roulements à rouleaux 9 et 10 à l'autre extrémité. Ces six roulements ont leur bague extérieure fixée au bout d'éléments de support de palier 11 appartenant à un stator 12. On constate que le rendement de cette ligne d'arbres est de 0,986, avec des pertes essentiellement produites dans le réducteur 3, ce qui est remarquable si on considère le nombre élevé de roulements, mais la puissance qui y est dissipée est tout de même suffisante pour exiger un refroidissement important.

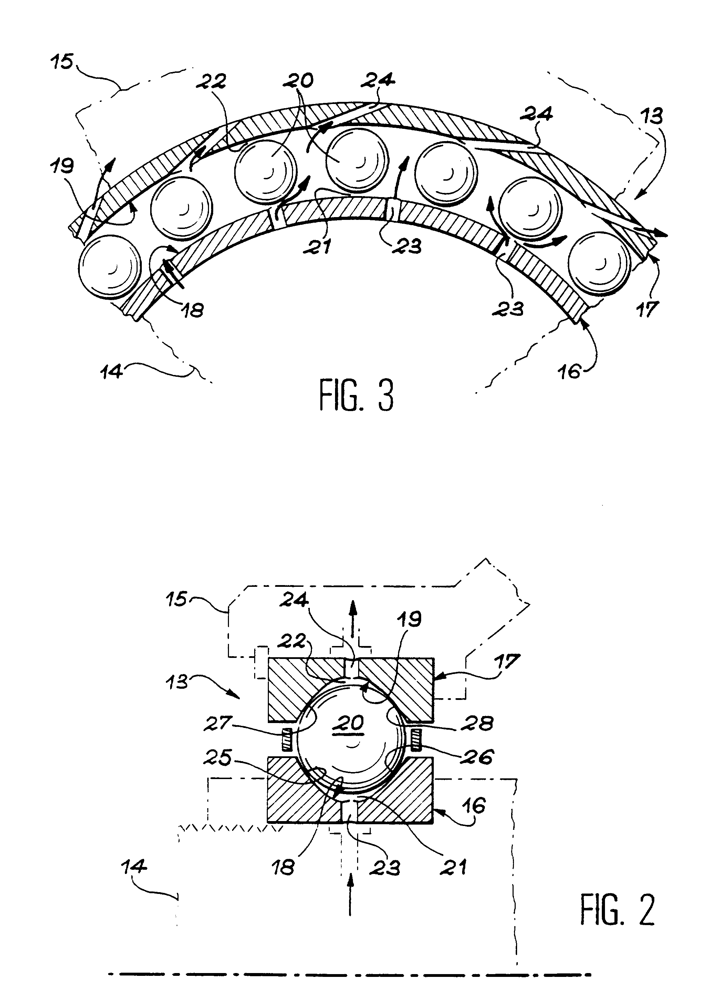

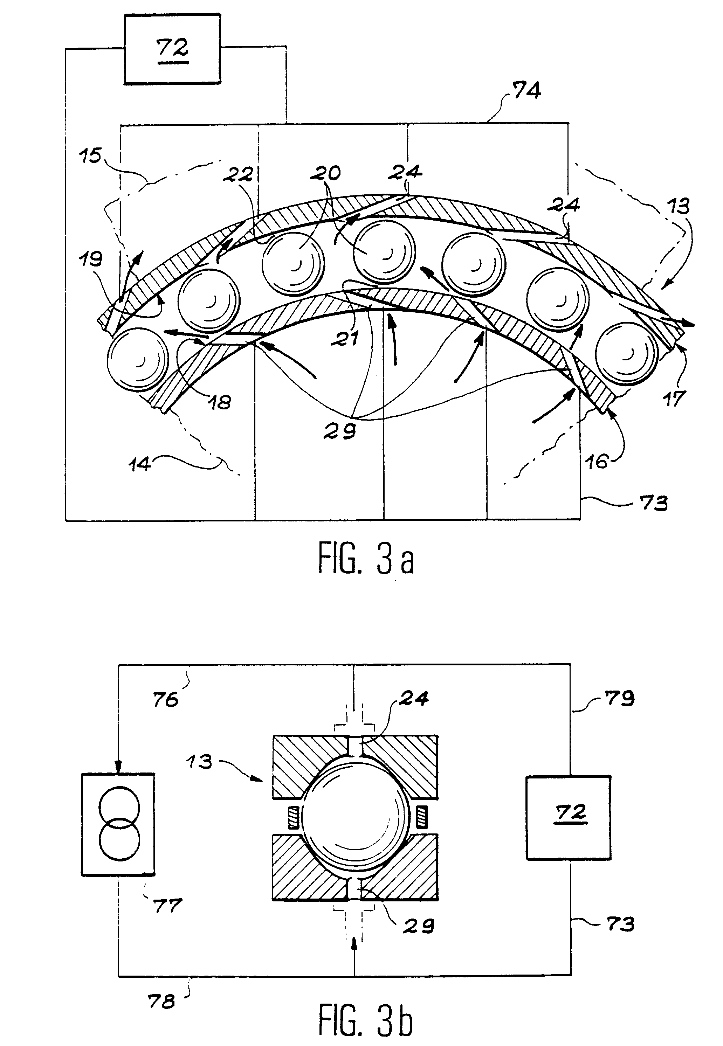

On passe maintenant aux commentaires des figures 2 et 3 qui représentent un roulement 13 conforme à l'invention et disposé entre un arbre 14 et une pièce de support 15 par les faces externes d'une bague intérieure 16 et d'une bague extérieure 17 respectivement. Ce roulement 13 peut remplacer les roulements à billes 5, 7 et 8 précédents. Les faces opposées de ces bagues, soit les faces internes dirigées l'une vers l'autre, sont donc les pistes 18 et 19 de roulement dans lesquelles les billes 20 sont retenues. Les pistes 18 et 19 ne sont pas toriques mais ont une section en forme d'ogive, avec un sommet 21 ou 22 appartenant à une circonférence centrale dans laquelle on a ménagé des orifices 23 et 24 qui traversent complètement la bague 16 ou 18. Les billes 20 ne recouvrent donc jamais ces orifices 23 et 24 mais touchent la bague intérieure 16 par deux points de contact latéraux 25 et 26, de part et d'autre des orifices 23, et la bague extérieure 17 par deux autres points de contact latéraux 27 et 28, également de part et d'autre des orifices 24. On remarque que les orifices 24 de la bague extérieure 17 sont inclinés dans le sens de rotation pour favoriser l'écoulement de l'huile. Ce sont des orifices de sortie vers lesquels l'huile est chassée par la force centrifuge produite par la rotation de l'arbre 14. Cet écoulement est compensé par une entrée d'huile à partir des orifices 23, de sorte qu'une circulation forcée s'établit, qui lubrifie le roulement et évacue la chaleur produite. Comme l'illustrent les flèches, l'huile contourne les billes 20 en passant entre elles et à côté d'elles et rejoint assez rapidement les orifices de sortie 24 en séjournant beaucoup moins longtemps dans le roulement 13 qu'avec les conception actuelles. Une partie de l'huile quitte aussi le roulement 13 en passant entre les bagues 16 et 17, mais elle est ramassée par des écopes selon des dispositions connues. L'huile repasse périodiquement dans le roulement 13.

Cette conception peut être améliorée de la façon illustrée à la figure 3a, où les orifices d'alimentation droits 23 ont été remplacés par des orifices d'alimentation 29 inclinés, contrairement aux orifices de drainage 24, inversement au sens de rotation du roulement 13 et d'avance des billes 20, à travers la bague intérieure 16. L'effet produit est encore de favoriser la circulation d'huile, l'aspiration ici, grâce à la rotation de la bague intérieure 16 qui accélère l'huile vers l'extérieur et aux billes 20 qui refoulent l'huile dans le roulement en avançant moins vite que la bague intérieure 16. Un tel dispositif permet de relier directement les orifices d'alimentation 29 et de drainage 24 à une bâche d'huile 72 par des canalisations respectivement notées 73 et 74. Le roulement permet de vaincre une pression de charge égale à environ un mètre de hauteur du lubrifiant : il peut alors assurer lui-même la circulation du lubrifiant, sans qu'une pompe soit eùployée ; le circuit d'huile ne comprend que des canalisations.

Si le roulement travaille dans des conditions plus dures, il faudra probablement recourir à une lubrification classique à pompe pour assurer un débit plus important. Le système de la figure 3a pourra alors être adjoint à un dispositif classique, selon la disposition de la figure 3b : le conduit 75 issu des orifices de drainage 24 bifurque en une branche 76 principale menant à une installation de lubrification 77 ordinaire, à pompe et bâche d'huile de grande capacité, qui renvoie l'huile au roulement 13 par des canalisations de retour 78 aboutissant aux orifices d'aspiration 29 et en une branche 79 auxiliaire menant à la bâche d'huile 72 de petite capacité, reliée aux orifices d'alimentation 29 par les canalisations 73. L'essentiel de la lubrification est produit par l'installation 77, mais si celle-ci s'arrête momentanément, la bâche 72 la supplée en fournissant un débit de secours suffisant pour une lubrification convenable.

La caractéristique essentielle de l'invention est que le drainage de l'huile hors du roulement 13, par les orifices de sortie 24, est facilité. Les pertes d'énergie par barattage de l'huile par les billes 20, dues à sa viscosité, sont donc réduites, bien au-delà des pertes par frottement plus grandes qu'entraînent les quatre points de contact par bille 20. Le rendement énergétique du roulement 13 est donc meilleur. Plus concrètement, on a observé des baisses de température de plusieurs dizaines de degrés en employant un roulement 13 conforme à l'invention au lieu d'un roulement ordinaire, cela dans les mêmes conditions de fonctionnement (140°C au lieu de 170°C par exemple). Dans une autre catégorie d'essais, on a réduit le débit de lubrification à travers le roulement 13 pour revenir à la température du roulement ordinaire, et on a constaté que ce résultat n'était pas obtenu avant une réduction de 67% du débit, pour laquelle la puissance dissipée était réduite de 50%. Ce progrès considérable peut être expliqué par un certain effet de cumul selon lequel une diminution du débit d'huile est accompagnée d'une diminution des pertes par barattage et un échauffement moindre qui rendent possible une nouvelle diminution du débit. On peut aussi profiter de ce meilleur emploi du lubrifiant en faisant tourner l'arbre 14 à une vitesse plus élevée.

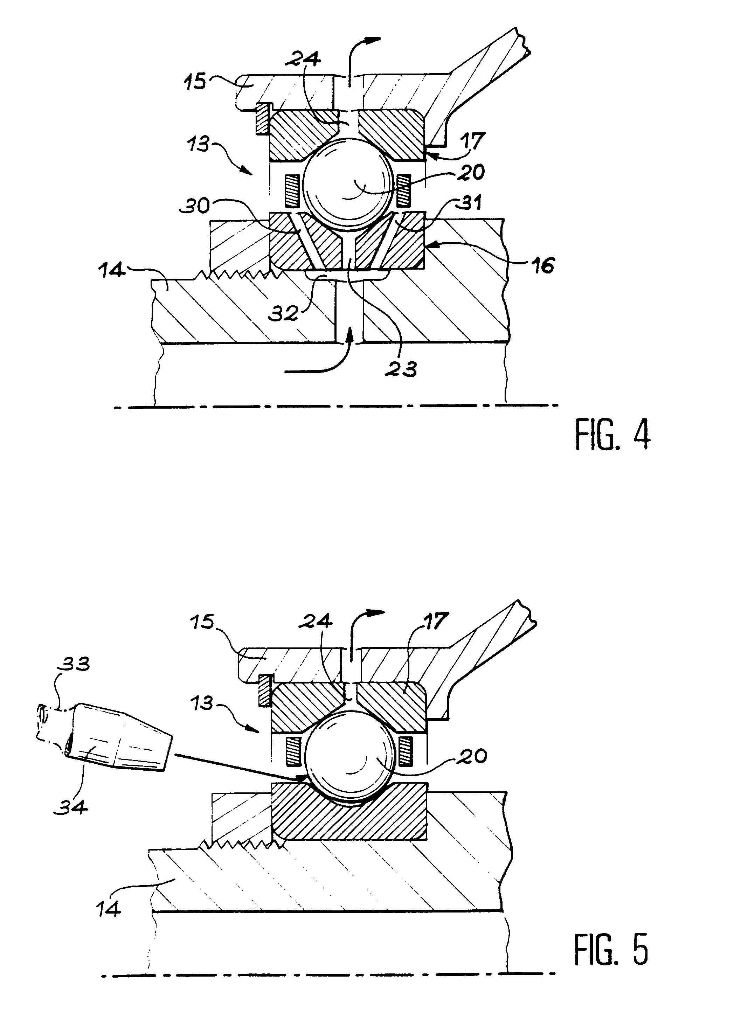

La mise en oeuvre de ce principe est compatible avec des réalisations différentes. C'est ainsi que, comme on le représente à la figure 4, la bague intérieure 16 peut également être percée par deux rangées d'orifices obliques 30 et 31 qui débouchent de part et d'autre des billes 20. Le fonctionnement du roulement ainsi modifié ne change que très peu, ce qui montre que c'est le drainage hors du roulement qui possède l'effet essentiel. On espère cependant obtenir un refroidissement plus régulier dans le roulement 13 en disposant au mieux les orifices obliques 30 et 31. L'arbre 14 comprend une chambre de distribution 32 pour répartir l'huile convenablement entre tous les orifices 23, 30 et 31. L'huile peut être introduite dans un creux au centre de l'arbre 14 par un éjecteur ou une pompe ou un moyen analogue.

Les orifices 23 centraux peuvent d'ailleurs être omis, et la bague intérieure 16 peut même être absolument dépourvue d'orifices et rester pleine. La figure 5 illustre une telle situation : l'huile coule dans un conduit 33 extérieur au roulement 13 et est projetée par une buse 34 au bout de celui-là vers les billes 20 en passant entre les bagues 16 et 17. Le drainage est encore accompli à travers les orifices 24 de la bague extérieure 17.

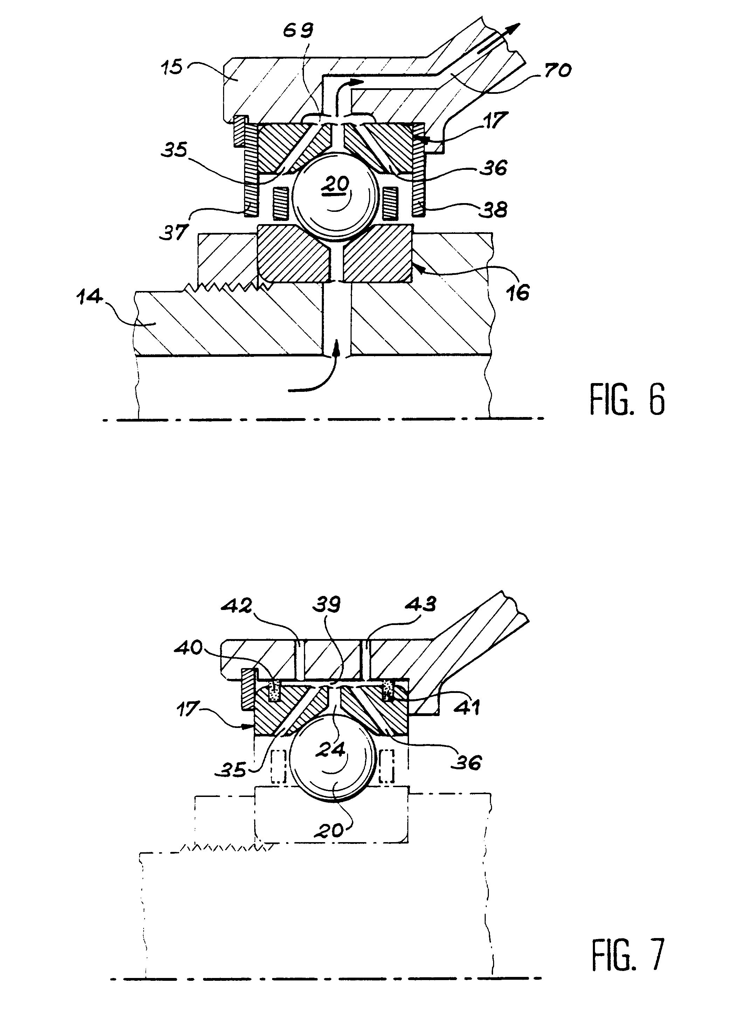

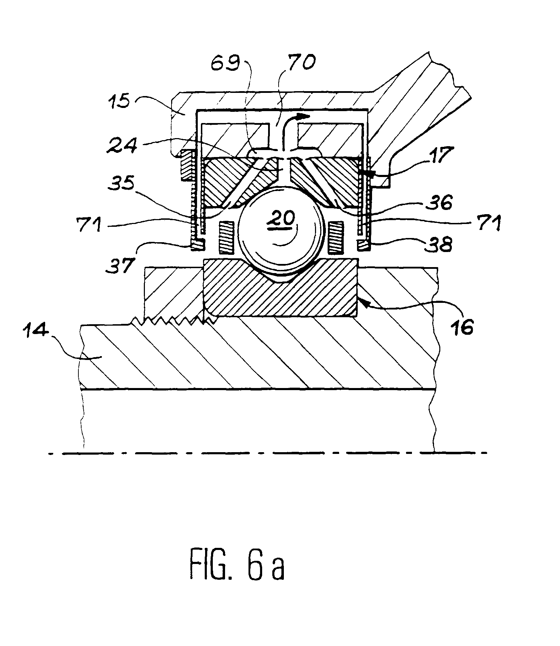

Des orifices obliques 35 et 36 peuvent aussi être percés à travers la bague extérieure 17, en deux rangées encadrant la rangée centrale d'orifices 24, comme on le voit à la figure 6. Il s'agit d'une conception où on cherche à éliminer totalement ou presque les fuites d'huile hors du roulement 13. On recouvre alors les ouvertures latérales entre les bagues 16 et 17 par des flasques 37 et 38 accolés à la bague extérieure 17 et qui s'étendent presque jusqu'à la bague intérieure 16. Comme la conservation du débit d'huile est garantie, on peut faire tourner le roulement 13 sans risque à des vitesses plus élevées. Les orifices 35, 36 comme 30, 31 sont situés à l'extérieur des points de contact 23, 26, 27 et 28. L'huile drainée hors du roulement par les orifices 24, 35 et 36 peut être renvoyée directement vers le roulement : comme la figure 6a le représente, le conduit d'évacuation 70 dans lequel circule l'huile après s'être rassemblée dans une chambre 69 annulaire creusée dans la pièce de support 15 à la sortie des orifices 24, 35 et 36 peut aboutir à des perçages 71 percés à travers les flasques latéraux 37 et 38 et qui s'ouvrent dans la cage du roulement, vers les billes 20. Le circuit de lubrification est alors fermé et les fuites d'huile presque nulles. La situation est alors analogue à celle d'un roulement fermé, lubrifié à la graisse et qui ne demande pas d'entretien sauf en complétant de temps en temps la quantité de lubrifiant qu'il contient. Comme la circulation d'huile est assurée par l'inclinaison des orifices de drainage, le circuit d'huile ne nécessite pas de pompe et est donc très simplifié. Loin de devoir être enfermé dans une enceinte étanche, le roulement sert alors lui-même de barrière d'étanchéité le long de l'arbre 14. Bien entendu, l'arrivée d'huile par l'arbre 14 n'existe plus et la bague intérieure 16 est intacte.

On a supposé que le conduit 70 était unique puis se ramifiait vers les perçages 71. On pourrait aussi utiliser autant de conduits 70 que de perçages 71.

Dans la plupart de ces réalisations, le drainage est produit par la bague extérieure 17 et l'alimentation par la bague intérieure 16. C'est qu'on préfère en général drainer par la bague stationnaire ; or on se souvient que la bague extérieure 17 est ici fixée au stator de la machine. On pourrait envisager une situation inverse, avec un écoulement centripète d'une bague extérieure tournante à une bague intérieure stationnaire ; ou encore, un écoulement de la bague stationnaire à la bague tournante. Ces situations sont moins favorables car il est normal d'exploiter les forces centrifuges communiquées à l'huile par une bague d'alimentation tournante pour favoriser le drainage, mais on peut se passer d'elles ou les remplacer par une plus forte pression dynamique de projection d'huile pour obtenir un résultat satisfaisant.

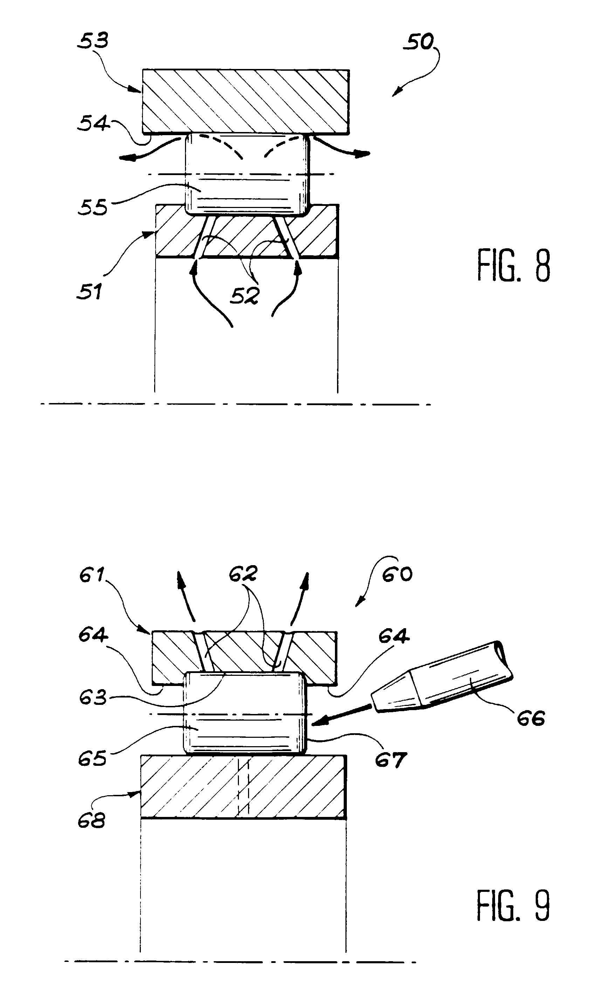

Il arrive que la bague stationnaire ne soit pas directement soutenue par un palier solide, mais par une couche d'huile, ce qui est illustré à la figure 7. Le jeu 39 devant la bague concernée (ici, la bague extérieure 17) est fermé latéralement par deux joints 40 et 41 et communique avec l'extérieur par deux rangées d'orifices de sortie 42 et 43, de part et d'autre de la rangée centrale d'orifices 24, mais on observe souvent un défaut d'uniformité de pression sur la bague extérieure 17 et donc un déséquilibre du palier.

Il est possible de lutter contre ce défaut en recourant encore aux orifices obliques 35 et 36, qui répartissent mieux l'huile entre les orifices de sortie 42 et 43 et égalisent ainsi la pression.

La figure 8 illustre un roulement à rouleaux 50 ordinaire, dont la bague intérieure 51 est percée d'orifices d'injection d'huile 52 et la bague extérieure 53 est pleine et à piste de roulement 54 lisse.

L'huile coule entre les rouleaux 55 vers l'extérieur, atteint la piste de roulement 54 et s'échappe vers les côtés du roulement 50 en s'écoulant latéralement sur la piste 54. On peut préférer le roulement 60 de la figure 9, conforme à l'invention, dont la bague extérieure 61 est percée de deux rangées d'orifices de drainage 62 établies sur deux circonférences latérales de la piste de roulement 63, à côté d'épaulements 64 qui retiennent les rouleaux 65 et canalisent l'huile.

Un éjecteur d'huile 66 analogue ou semblable à celui de la figure 5 peut être prévu pour la lubrification : il projette de l'huile sur un des flancs 67 des rouleaux 65 ; l'huile se répand sur toute la surface des rouleaux 65 et sur les pistes de roulement des bagues extérieure et intérieure 68, avant que son excédent ne soit rejeté par les orifices de drainage 62.

Les mêmes remarques que pour les roulements à billes des figures précédentes s'appliquent ici : n'importe laquelle des deux bagues 61 et 68 peut être fixe ou tournante, et un grand choix de procédés d'injection de l'huile dans le roulement existe. On pourrait ainsi disposer au moins un orifice d'injection d'huile (représenté en pointillés) à travers la bague intérieure 68 et débouchant au centre de celle-ci, dans la direction latérale, pour assurer cette alimentation.

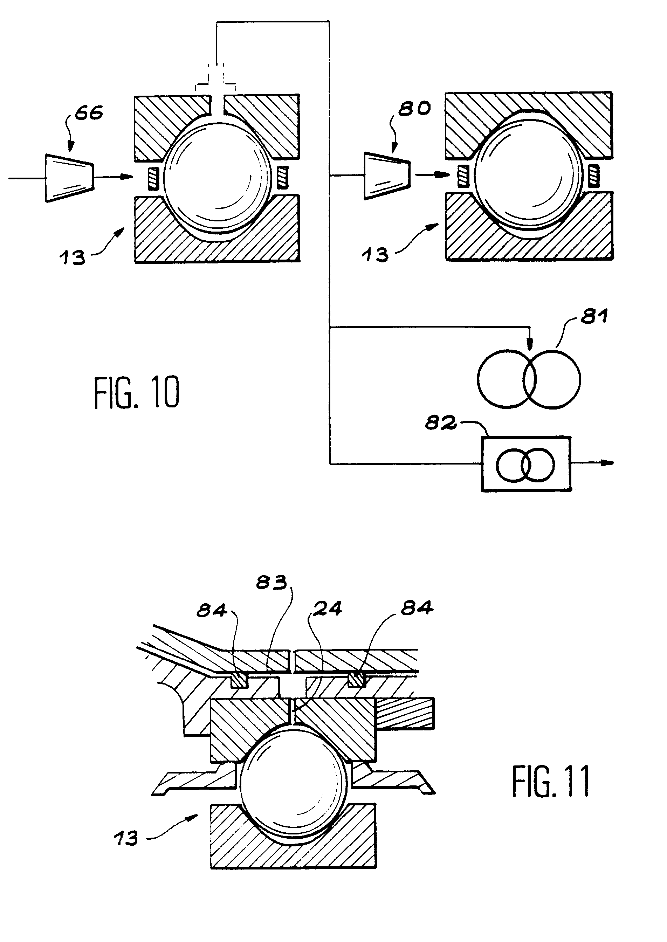

L'énergie apportée au lubrifiant par l'obliquité des orifices de drainage peut aussi être exploitée à d'autres fins que le retour de lubrifiant vers le même roulement : comme le représente la figure 10, le lubrifiant récupéré par les orifices de drainage 24 du roulement 13 peut être acheminé à un éjecteur 80 de lubrification d'un autre roulement 13' (et de proche en proche à une succession de roulements), à un engrenage 81 lubrifié goutte à goutte, à un moteur hydraulique 82 ou à d'autres dispositifs et appareils. Ces possibilités étendues d'exploitation sont appréciables dans des moteurs d'avion, qui possèdent de nombreux équipements annexes qu'il faut alimenter ou faire fonctionner. Quant à la figure 11, elle montre que l'huile drainée peut aussi alimenter un coin d'huile dans un palier fluide 83 annulaire autour du roulement 13, entre deux joints 84. Il est vrai que la pression sera assez faible, mais ce système mérite l'attention à cause de la régularité d'alimentation et de la bonne répartition de l'huile.

## Revendications

1. Roulement (13, 60) à éléments de roulement (20, 65) engagés entre une bague intérieure (16, 68) et une bague extérieure (17, 61), l'une des bagues étant traversée d'orifices de drainage inclinés (24, 62) menant hors du roulement de liquide lubrifiant caractérisé en ce que les orifices de drainage sont inclinés radialement dans le sens de rotation du roulement pour favoriser l'écoulement du liquide lubrifiant.

2. Roulement (13) selon la revendication 1, caractérisé en ce que lesdits éléments sont des billes (20), les bagues ont toutes deux une piste (18, 19) de circulation des billes à deux points latéraux (25 à 28) de contact des billes, points situés de côté et d'autre d'une aire centrale, et les orifices de drainage (24) sont situés sur l'aire centrale.

3. Roulement selon la revendication 2, caractérisé en ce que d'autres orifices (30, 31, 35, 36) traversent au moins une des bagues, les points latéraux de contact des éléments avec cette bague étant situés entre les autres orifices et la circonférence centrale de cette bague.

4. Roulement selon la revendication 3, caractérisé en ce que les autres orifices (35, 36) sont situés à travers la bague traversée par les orifices de drainage et le roulement est recouvert par des flasques latéraux (37, 38).

5. Roulement à billes selon l'une quelconque des revendications 1 à 4, caractérisé en ce que l'autre des bagues est traversée d'orifices (23) d'alimentation de liquide lubrifiant sur la circonférence centrale.

6. Roulement selon l'une quelconque des revendications 1 à 5, caractérisé en ce que la bague traversée par les orifices de drainage est stationnaire.

7. Roulement selon la revendication 1, caractérisé en ce que lesdits éléments sont des rouleaux (65).

8. Roulement selon la revendication 7, caractérisé en ce que les orifices de drainage sont situés sur deux aires annulaires latérales d'une des bagues.

9. Roulement selon l'une quelconque des revendications 1 à 8, caractérisé en ce qu'il comprend des orifices d'alimentation du lubrifiant (29) inclinés dans le sens de rotation du roulement.

10. Roulement selon l'une quelconque des revendications 1 à 9, caractérisé en ce que les orifices de drainage (24) sont prolongés par des conduits (70, 71, 76, 79) de retour de lubrifiant vers le roulement.

11. Roulement selon la revendication 4 et 10, caractérisé en ce que les conduits de retour (71) passent par les flasques (37, 38).

12. Roulement selon l'une quelconque des revendications 10 ou 11, caractérisé en ce que les conduits de retour (70, 79) sont dépourvus de moyen de pompage.

13. Roulement selon la revendication 12, caractérisé en ce que les conduits de retour passent par une bâche d'huile (72).

14. Roulement selon la revendication 10, caractérisé en ce que les conduits de retour bifurquent en une branche (76, 78) passant par une installation de pompage (77) et une branche (79, 73) passant par une bâche d'huile (72).

15. Roulement selon l'une quelconque des revendications 1 à 9, caractérisé en ce que les orifices de drainage aboutissent à une pièce à lubrifier (13', 81) autre que le roulement.

16. Roulement selon l'une quelconque des revendications 1 à 9, caractérisé en ce que les orifices de drainage aboutissent à un moteur hydraulique (82).

17. Roulement selon l'une quelconque des revendications 1 à 9, caractérisé en ce que les orifices de drainage aboutissent à un palier fluide (83).

## Patentansprüche

1. Wälzlager (13, 60) mit Wälzelementen (20, 65), die zwischen einem Innenring (16, 18) und einem Außenring (17, 61) gefaßt sind, wobei einer dieser Ringe von geneigten Drainageöffnungen (24, 62) durchdrungen wird, die Schmierflüssigkeit aus dem Wälzlager herausführen,
**dadurch gekennzeichnet,**
daß die Drainageöffnungen in Drehrichtung des Wälzlagers radial geneigt sind, um die Strömung der Schmierflüssigkeit zu begünstigen.

2. Wälzlager (13) nach Anspruch 1, dadurch gekennzeichnet, daß die Wälzelemente Kugeln (20) sind, beide Ringe eine Kugelumlaufbahn (18, 19) mit zwei seitlichen Berührungspunkte (25 bis 28) für die Kugeln aufweisen, diese Punkte zu beiden Seiten einer zentralen Bahn liegen und die Drainageöffnungen (24) auf der zentralen Bahn liegen.

3. Wälzlager nach Anspruch 2, dadurch gekennzeichnet, daß wenigstens einer der Ringe von weiteren Öffnungen (30, 31, 35, 36) durchdrungen wird und die seitlichen Berührungspunkte, an denen die Wälzelemente diesen Ring berühren, zwischen den weiteren Öffnungen und dem zentralen Umkreis dieses Rings liegen.

4. Wälzlager nach Anspruch 3, dadurch gekennzeichnet, daß die weiteren Öffnungen (35, 36) durch den von den Drainageöffnungen durchdrungenen Ring verlaufen und das Wälzlager von Seitenflanschen (37, 38) abgedeckt ist.

5. Kugellager nach einem der Ansprüche 1 bis 4, dadurch gekennzeichnet, daß der andere Ring auf dem zentralen Umkreis von Öffnungen (23) zur Zuführung von Schmierflüssigkeit durchdrungen wird.

6. Wälzlager nach einem der Ansprüche 1 bis 5, dadurch gekennzeichnet, daß der von den Drainageöffnungen durchdrungene Ring stationär ist.

7. Wälzlager nach Anspruch 1, dadurch gekennzeichnet, daß die genannten Wälzelemente Rollen (65) sind.

8. Wälzlager nach Anspruch 7, dadurch gekennzeichnet, daß die Drainageöffnungen auf zwei ringförmigen seitlichen Bahnen eines der Ringe liegen.

9. Wälzlager nach einem der Ansprüche 1 bis 8, dadurch gekennzeichnet, daß es Öffnungen (29) zur Schmiermittelzuführung aufweist, die in Drehrichtung des Wälzlagers geneigt sind.

10. Wälzlager nach einem der Ansprüche 1 bis 9, dadurch gekennzeichnet, daß die Drainageöffnungen (24) durch Leitungen (70, 71, 76, 69) zur Rückführung des Schmiermittels zu dem Wälzlager verlängert werden.

11. Wälzlager nach Anspruch 4 und 10, dadurch gekennzeichnet, daß die Rückführungsleitungen (71) durch die Flansche (37, 38) verlaufen.

12. Wälzlager nach einem der Ansprüche 10 oder 11, dadurch gekennzeichnet, daß die Rückführungsleitungen (70, 79) keine Pumpvorrichtung aufweisen.

13. Wälzlager nach Anspruch 12, dadurch gekennzeichnet, daß die Rückführungsleitungen durch einen Ölbehälter (72) verlaufen.

14. Wälzlager nach Anspruch 10, dadurch gekennzeichnet, daß die Rückführungsleitungen sich verzweigen in einen Zweig (76, 78), der durch eine Pumpvorrichtung (77) verläuft, und einen Zweig (79, 73), der durch einen Ölbehälter (72) verläuft.

15. Wälzlager nach einem der Ansprüche 1 bis 9, dadurch gekennzeichnet, daß die Drainageöffnungen an einem anderen zu schmierenden Teil (13', 81) enden als dem Wälzlager.

16. Wälzlager nach einem der Ansprüche 1 bis 9, dadurch gekennzeichnet, daß die Drainageöffnungen an einem hydraulischen Motor (82) enden.

17. Wälzlager nach einem der Ansprüche 1 bis 9, dadurch gekennzeichnet, daß die Drainageöffnungen an einem hydrostatischen Lager (83) enden.

## Claims

1. A rolling bearing( (13, 60) having rolling elements (20, 65) engaged between an inner ring (16, 68) and an outer ring (17, 61), one of the rings being pierced with inclined drain holes (24, 62) leading lubricating liquid out of the bearing, the drain holes being inclined radially in the direction of rotation of the bearing to boost the flow of the lubricating liquid

2. A bearing (13) according to claim 1, characterised in that the rolling elements are balls (20), both rings have a ball race (18, 19) having two lateral ball contact points (25 to 28) disposed on either side of a central area, and the drain holes (24) are disposed in the central area.

3. A bearing according to claim 2, characterised in that other holes (30, 31, 35, 36) extend through at least one of the rings, the lateral contact points of the rolling elements with the latter ring being disposed between said other holes and the central periphery of the latter ring.

4. A bearing according to claim 3, characterised in that the other holes (35, 36) extend through the ring pierced with the drain holes and the bearing is overlapped by lateral webs (37,38).

5. , A bearing according to any of claims 1 to 4, characterised in that the other of the rings is pierced on the central periphery with feed holes (23) for a lubricating liquid.

6. A bearing according to any of claims 1 to 5, characterised in that the ring pierced with the drain holes is stationary.

7. A bearing according to claim 1, characterised in that the rolling elements are rollers (65).

8. A beariug according to claim 7, characterised in that the drain holes are disposed in two lateral annular areas of one of the rings.

9. A bearing according to any of claims 1 to 8, characterised in that it is formed with lubricant feed holes (29) inclined in the direction of rotation of the bearing.

10. A bearing according to any of claims 1 to 9, characterised in that the drain holes (24) are extended by ducts ( 70, 71,76, 79) for returning lubricant to the bearing.

11. A bearing according to claims 4 and 10, characterised in that the return ducts (71) extend through the webs (37, 38).

12. A bearing according to claim 10 or claim 11, characterised in that the return ducts (70, 79) are without pumping means.

13. A bearing according to claim 12, characterised in that the return ducts extend through an oil tank (72).

14. A bearing according to claim 10, characterised in that the return ducts split into a branch (76, 78) extending through a pumping installation (77) and a branch (79,73) extending through an oil tank (72).

15. A bearing according to any of claims 1 to 9, characterised in that the drain holes terminate at an item (13', 81) to be lubricated other than the bearing.

16. A bearing according to any of claims 1 to 9, characterised in that the drain holes terminate at a hydraulic motor (82).

17. A bearing according to any of claims 1 to 9, characterised in that the drain holes terminate at a fluid bearing (83).
